# EUROPÄISCHE PATENTSCHRIFT

(11) **EP 3 245 148 B1**
(45) Veröffentlichungstag und Bekanntmachung des Hinweises auf die Patenterteilung: **06.03.2019**
(21) Anmeldenummer: 16700520.6
(22) Anmeldetag: 04.01.2016
(51) Int. Cl.: B65G 17/08, B65G 17/24

(54) **FÖRDERORGAN MIT ROLLENMECHANISMUS**
CONVEYING MEMBER WITH ROLLER MECHANISM
SYSTÈME DE TRANSPORT À MÉCANISME À ROULEAUX

(30) Priorität: 13.01.2015 CH 41152015
(43) Veröffentlichungstag der Anmeldung: 22.11.2017
(73) Patentinhaber: WRH Walter Reist Holding AG, 8272 Ermatingen (CH)
(72) Erfinder: WEBER, Thomas, 8185 Winkel (CH); MÄDER, Carl Conrad, 8335 Hittnau (CH); MOOR, René, 8422 Pfungen (CH)
(74) Vertreter: Frei Patent Attorneys
(86) Internationale Anmeldenummer: PCT/CH2016/000001
(87) Internationale Veröffentlichungsnummer: WO 2016/112471

(56) Entgegenhaltungen:
- EP-A1- 2 746 196
- EP-A2- 1 398 282
- WO-A1-2012/151127
- US-A1- 2005 126 896
- US-B1- 7 360 641

## Beschreibung

Die Erfindung bezieht sich auf das Gebiet von Förderorganen für einen Förderer, und insbesondere auf das Gebiet von Förderorganen für einen Stauförderer. Diese Förderorgane umfassen ein Förderelement, welches eine Hauptfläche ausbildet, und mindestens einen Rollenmechanismus mit mindestens einer Rolle. Die Erfindung bezieht sich zudem auf Förderer, welche solche Förderorgane umfassen.

Ein derartiges Förderorgan ist beispielsweise aus WO 01/32533 bekannt. Darin ist eine Modulbandkette beschrieben, deren Module eine relativ zur Hauptfläche der Module versenkbare Einheit aufweist. Die Einheit kann dabei einerseits über die Hauptfläche hinausragen oder andererseits bündig mit der Hauptfläche oder darunter angeordnet sein. Die versenkbare Einheit kann unter Anderem eine Rolle umfassen, welche in einer Ausführungsform der versenkbaren Einheit frei drehbar ist und in einer anderen Ausführungsform der versenkbaren Einheit angetrieben ist. In einer weiteren Ausführungsform kann die versenkbare Einheit starre Mitnehmer umfassen. Auf diese Weise kann die Modulbandkette je nach Ausführungsform und Position der versenkbaren Einheit entweder das geförderte Gut auf der Hauptfläche der Module durch Mitnehmer unterstützt oder auch ohne Mitnehmer fördern, auf frei drehbaren Rollen fördern oder auf angetriebenen Rollen fördern.

Ein weiteres derartiges Förderorgan ist aus EP 2 746 196 A1 bekannt. Darin ist ein Kettenförderer beschrieben, dessen Kette aus einer Vielzahl von Gliedern besteht, die durch Stifte drehbar miteinander verbunden sind. Die Glieder umfassen Glieder, die jeweils eine Rolle aufweisen. Der Kettenförderer weist einen Hebemechanismus auf zum Anheben jeder Rolle von einer versenkten Position in eine überstehende Position. In der überstehenden Position steht jede Rolle über eine Ladefläche der Kette, auf die Artikel geladen werden, nach oben hervor. Die Artikel werden von den Rollen in der überstehenden Position gestützt, so dass die Artikel von der Ladefläche getrennt und darüber angeordnet sind. EP 2 746 196 A1 offenbart ein Förderorgan nach dem Oberbegriff des Anspruchs 1.

Ein aus WO 01/32533 bekanntes Modul, welches als Förderorgan bezeichnet werden kann, und auch der aus EP 2 746 196 A1 bekannte Kettenförderer weisen aber den Nachteil auf, dass die versenkbaren Einheiten in versenktem Zustand viel Raum beanspruchen, wodurch die Förderorgane nicht kompakt ausgebildet sein können.

Das aus WO 01/32533 bekannte Förderorgan weist auch den Nachteil auf, dass für jede einzelne Änderung der Art des Förderns (mit oder ohne Mitnehmer, auf frei drehbaren Rollen oder nicht, auf angetriebenen Rollen oder nicht) eine spezifische Ausführungsform der versenkbaren Einheit benötigt wird. Dies resultiert in einer aufwendigen und komplizierten Konstruktion des Förderorgans, insbesondere wenn mehr als nur zwei Arten des Förderns möglich sein sollen.

Jede Änderung der Art des Förderns bedingt somit eine spezifische Ausführungsform der versenkbaren Einheit, welche zudem jeweils in ausreichend hoher Anzahl auf dem Modul vorhanden sein muss, um seine Funktion erfüllen zu können. Die Förderorgane müssen somit je nach Anforderung mit einer hohen Anzahl verschiedener versenkbarer Einheiten ausgestattet sein. Auch dies resultiert in einer aufwendigen und komplizierten Konstruktion des Förderorgans.

Ein vollständiges Versenken des versenkbaren Moduls kann in langen Wegen zwischen der versenkten Stellung des versenkbaren Moduls und der nicht versenkten Stellung resultieren. Durch grosse Distanzen zwischen beiden Stellungen kann das versenkbare Modul nur langsam oder aber rasch und unter hoher Materialbelastung zwischen den beiden Stellungen bewegt werden.

Die aufwendige und komplizierte Konstruktion des Förderorgans verursacht hohe Kosten bei Herstellung, Wartung und Reparatur. Zudem sind aufwendige und komplizierte Konstruktionen anfällig für Verschleiss und Defekte.

Eine aufwendige und komplizierte Konstruktion des Förderorgans resultiert zudem bei robuster Ausführungsweise in hohem Gewicht des Förderorgans, was zu einem hohen Energieverbrauch beim Bewegen des Förderorgans führt.

Es ist deshalb Aufgabe der Erfindung, ein Förderorgan der eingangs genannten Art und/oder einen Förderer mit einem solchen Förderorgan zu schaffen, welches bzw. welcher mindestens einen der oben genannten Nachteile mindestens teilweise behebt.

Das erfindungsgemässe Förderorgan für einen Förderer umfasst ein Förderelement und mindestens einen Rollenmechanismus. Das Förderelement bildet eine Hauptfläche aus. Der Rollenmechanismus umfasst mindestens eine Rolle, welche eine physische Rollenachse aufweist, und eine Rollenhalterung. Die Rollenachse ist an der Rollenhalterung befestigt. Die Rollenhalterung kann mit einem Stellmittel zusammenwirken. Die Rollenhalterung ist am Förderelement angeordnet und ist derart ausgebildet, dass die Rollenachse relativ zur Hauptfläche des Förderelements wenigstens zwischen einer ersten Position und einer zweiten, von der ersten räumlich verschiedenen Position beweglich ist. Die Rolle ragt sowohl in der ersten als auch in der zweiten Positionen der Rollenachse mindestens teilweise über die Hauptfläche des Förderelements hinaus. Die Rolle ist imstande, in der ersten Position der Rollenachse eine Arretierstellung und in der zweiten Position der Rollenachse eine Freilaufstellung einzunehmen. Dabei ist die Rolle in der Arretierstellung bezüglich einer Drehung relativ zur Hauptfläche arretiert, und die Rolle ist in der Freilaufstellung frei drehend.

Erfindungsgemäß ist das Förderorgan derart ausgestaltet, dass die Rolle in der ersten und in der zweiten Position der Rollenachse sowie in allen Positionen auf einem Verstellweg zwischen der ersten und der zweiten Position der Rollenachse mindestens teilweise über die Hauptfläche des Förderelements hinausragt.
Insbesondere ist die Rollenhalterung derart ausgestaltet, dass die Rolle in allen möglichen Positionen der Rollenachse in der Rollenhalterung mindestens teilweise über die Hauptfläche des Förderelements hinausragt.

Insbesondere ist das Förderorgan ein Förderorgan für einen Stauförderer.

Das zu fördernde Gut ist insbesondere Stückgut. Das zu fördernde Gut kann beispielsweise ein Paket, ein Bündel, ein Sammelbehälter oder eine Schale sein.

Das Förderorgan kann beispielsweise als Platte zum Befestigen an einem Fördermittel ausgebildet sein. Das Fördermittel kann dabei durch das Fördern auf Zug und/oder auf Druck belastet werden. Das Förderorgan kann etwa als Platte zum Befestigen an einem Zugmittel und insbesondere an einer Kette eines Plattenkettenförderers ausgebildet sein.

Das Förderorgan kann auch etwa als Modul einer Modulbandkette ausgebildet sein, wobei die Modulbandkette selbst (auch bezeichnet als Mattenkette) als Förderer dient.

Der Förderer kann als Plattenkettenförderer ausgebildet sein, wobei dieser Förderorgane in Form von Platten umfasst, welche an einem Fördermittel und insbesondere an einer Förderkette befestigt sind.

Der Förderer kann auch als Modulbandkettenförderer öder anders bezeichnet als Mattenkettenförderer ausgebildet sein, wobei die Modulbandkette einzelne miteinander verbundene Förderorgane in Form von Modulen umfasst.
Die Hauptfläche eines Förderelements ist dem zu fördernden Gut zugewandt. Das zu fördernde Gut kann mit der Hauptfläche in Kontakt stehen, beispielsweise etwa darauf aufliegen. Das zu fördernde Gut kann auch ohne mit der Hauptfläche in direktem Kontakt zu stehen gefördert werden, etwa wenn das zu fördernde Gut auf einem oder mehreren die Hauptfläche überragenden Elementen aufliegt. Solche über die Hauptfläche hinausragende Elemente können etwa Rollen umfassen und/oder Rollen sein.

Die Hauptfläche deckt unterhalb des zu fördernden Guts angeordnete Teile des Förderers zum zu fördernden Gut hin ab.

Die Hauptfläche hat den Vorteil, dass sie bei geeigneter Anordnung von benachbarten Förderorganen eine im Wesentlichen durchgehende Fläche ausbilden kann. Im Wesentlichen durchgehend bedeutet in diesem Zusammenhang, dass sich zwischen zwei benachbarten Hauptflächen ein Abstand mit einer Fläche von maximal 30% der Hauptfläche befindet. Insbesondere befindet sich ein Abstand mit einer Fläche von maximal 15% der Hauptfläche zwischen zwei benachbarten Hauptflächen.

Diese im Wesentlichen durchgehende Fläche kann verhindern, dass das zu fördernde Gut durch Zwischenräume zwischen den Rollen hindurch fällt, indem das zu fördernde Gut auf der Hauptfläche aufliegt und durch die Hauptfläche zurückgehalten wird. Ein Förderer mit einer im Wesentlichen durchgehenden Fläche kann dadurch für eine Vielzahl von verschiedenen zu fördernden Gütern verwendet werden, und zwar sowohl gleichzeitig (also gemischte zu fördernde Güter) und/oder zeitlich gestaffelt (abwechselnde Gruppen von zu fördernden Güter gleicher Sorte).

Eine im Wesentlichen durchgehende Fläche dient auch der Betriebssicherheit, da keine oder nur kleine Lücken zwischen den Förderorganen bestehen und ein Risiko eines Verkantens, Hängenbleibens oder Mitreissens gering ist.

Eine Rollenhalterung ist derart ausgebildet, dass die Rolle von der Rollenhalterung gehalten wird.

Die physische Rollenachse der Rolle kann starr bezüglich der Rolle ausgebildet und angeordnet sein. Die physische Rollenachse der Rolle kann aber auch drehbar bezüglich der Rolle ausgebildet und angeordnet sein. Mit "Drehung der Rolle um die Rollenachse" kann also sowohl eine sich relativ zur physischen Rollenachse drehende Rolle bezeichnet werden als auch eine sich gemeinsam mit der physischen Rollenachse zusammen drehende Rolle bezeichnet werden.

Erfindungsgemäß ist das Stellmittel ein Mittel zum Zusammenwirken mit mindestens einem Teil der der Rollenhalterung. Mit Zusammenwirken ist eine kraftschlüssige Interaktion gemeint. Durch das Stellmittel kann eine räumliche Konfiguration mindestens eines Teils der Rollenhalterung geändert werden.
Die Rollenhalterung ist am Förderelement angeordnet, wodurch die Rollenhalterung, die Rolle und die Rollenachse mit dem Förderelement mitbewegt werden.
Da die Rollenachse relativ zur Hauptfläche des Förderelements wenigstens zwischen einer ersten Position und einer zweiten, von der ersten räumlich verschiedenen Position beweglich ist, ist mit der Rollenachse auch die Rolle zwischen wenigstens einer ersten Position und einer zweiten, von der ersten räumlich verschiedenen Position beweglich.
"Relativ zur Hauptfläche beweglich" bedeutet, dass eine Bewegung mit mindestens einer Teilkomponente in orthogonaler Richtung zur Hauptfläche möglich ist. Mit anderen Worten heisst "relativ zur Hauptfläche beweglich", dass ein Abstand zur Hauptfläche veränderbar ist.
Über die Hauptfläche des Förderelements hinaus zu ragen bedeutet, in einen Förderraum hinein zu ragen. Die mindestens teilweise über die Hauptfläche des Förderelements hinausragende Rolle ragt also mindestens teilweise über die Hauptfläche in den Förderraum hinein. Gleichzeitig ragt die Rolle mindestens teilweise über den Rollenmechanismus hinaus, sodass die Rolle an mindestens einer Stelle sowohl über die Hauptfläche als auch über den Rollenmechanismus hinausragt.

Mit Förderraum ist ein Raum bezeichnet, welcher an die Hauptfläche anschliesst und in welchem das vom Förderer geforderte Gut angeordnet werden kann.

Die Rollenhalterung ist derart ausgebildet, dass die Rolle die Arretierstellung einnehmen kann und in dieser Arretierstellung hinsichtlich einer Drehung um die Rollenachse und dadurch hinsichtlich einer Drehung relativ zur Hauptfläche arretiert ist. Mit anderen Worten ist die Rolle in der Arretierstellung starr bezüglich der Hauptfläche angeordnet. Insbesondere sind sowohl Rollenachse als auch Rolle in der Arretierstellung bezüglich der Hauptfläche räumlich arretiert also fixiert.

Die in der Arretierstellung der Rolle aus der Hauptfläche vorstehende Rolle kann beispielsweise als Mitnehmer des Förderorgans wirken. Der Mitnehmer erhöht eine Krafteinwirkung des Förderorgans auf das zu fördernde Gut. Mit Krafteinwirkung ist beispielsweise eine Übertragung von kinetischer Energie vom Förderorgan auf das zu fördernde Gut gemeint.

Die Rollenhalterung ist ausserdem derart ausgebildet, dass die Rolle die Freilaufstellung einnehmen kann und in dieser Freilaufstellung relativ zur Hauptfläche frei drehbar ist. Frei drehbar bedeutet dabei, dass eine Lauffläche der Rolle frei von Kontakt mit anderen Teilen des Rollenmechanismus als der Rolle ist. Mit anderen Worten ist die Rolle in der Freilaufstellung bezüglich der Hauptfläche frei drehbar gelagert. Dabei kann die Rollenachse ebenfalls relativ zur Hauptfläche frei drehbar sein. Die Rollenachse kann in der Freilaufstellung der Rolle allerdings auch starr bezüglich der Hauptfläche angeordnet sein.

Die in der Freilaufstellung der Rolle aus der Hauptfläche vorstehende Rolle kann beispielsweise als Linearlager des Förderorgans wirken. Das Linearlager dient einer möglichst reibungsfreien Translation des geförderten Guts relativ zum Förderorgan, verringert also eine Krafteinwirkung des Förderorgans auf das geförderte Gut.

Das oben beschriebene Förderorgan weist den Vorteil auf, dass das Förderorgan zu mindestens zwei Arten des Förderns befähigt ist, aber dennoch eine einfache Konstruktion aufweist.

Indem die Rolle weder in der ersten noch in der zweiten Position der Rollenachse im Förderorgan versenkt ist (i.e. in beiden Positionen über die Hauptfläche hinaus ragt), kann das Förderorgan kompakt ausgebildet sein.

Das Förderorgan kann bei robuster Ausführungsweise mit geringem Gewicht ausgebildet sein.

Die Rollenachse kann durch eine geringe räumliche Bewegung von der ersten zur zweiten Position bewegt werden (und umgekehrt). Geringe Distanzen zwischen den Positionen erlauben ein rasches und/oder materialschonendes Wechseln zwischen den Positionen.

Die Rolle kann eine Lauffläche aufweisen, welche gummiert ausgebildet ist.

Die Lauffläche der Rolle ist eine Fläche der Rolle, welche mit dem gefördertem Gut in Kontakt treten kann. Eine gummierte Lauffläche weist einen hohen Haft- und Gleitreibungskoeffizienten auf.

Insbesondere kann die Rolle bombiert ausgebildet sein. Das heisst, dass die Lauffläche der Rolle einen konvexen Querschnitt aufweist.

Bombierte Rollen können durch ihren abgerundeten Querschnitt materialschonend mit dem zu fördernden Gut in Kontakt treten.

Als optionales Merkmal ist die Rollenhalterung derart ausgebildet, dass die Rolle in einer Antriebstellung der Rolle in der Rollenhalterung angetrieben ist und dabei mindestens teilweise über die Hauptfläche des Förderelements hinaus ragt.

Mit angetriebener Rolle ist eine Rolle gemeint, welche durch eine Krafteinwirkung von Aussen (durch einen Antrieb) mit einer vorbestimmten Geschwindigkeit um die Rollenachse dreht.

Eine bombierte Rolle erlaubt es beispielsweise, den Antrieb auf eine einfache Weise mit einer Übersetzung bzw. Untersetzung zu versehen. Die Übersetzung des Antriebs erfolgt dadurch, dass der Antrieb die Rolle an verschiedenen Abständen zur Rollenachse antreibt, was durch die bombierte Form möglich ist. In einem typischen Fall der Übersetzung liegt das zu fördernde Gut am von der Rollenachse am weitesten entfernten Punkt der Lauffläche an der Rolle auf. Der Antrieb hingegen greift versetzt zum weitesten von der Rollenachse entfernten Punkt an und liegt näher an der Rollenachse. Dadurch wird das zu fördernde Gut mit einer Untersetzung angetrieben, also mit einer höheren Geschwindigkeit angetrieben als der Antrieb aufweist.

Es ist auch möglich, dass der Antrieb die Rolle mit einer Übersetzung antreibt - das zu fördernde Gut also mit einer geringeren Geschwindigkeit angetrieben wird als der Antrieb aufweist. Dies kann beispielsweise durch zusätzliche Räder und/oder Rollen erfolgen, also durch eine Übersetzungsmechanik.

Die Rolle ragt in ihrer Antriebsstellung mindestens teilweise in den Förderbereich hinein und dabei mindestens an einer Stelle gleichzeitig mindestens teilweise über den Rollenmechanismus hinaus.

Insbesondere unterscheidet sich die Antriebstellung von der Arretierstellung durch eine verschiedene räumliche Position der Rollenachse. Die Position der Rollenachse in der Antriebstellung und der Freilaufstellung kann übereinstimmen. Die Position der Rollenachse in der Antriebstellung kann aber auch verschieden von der Position der Rollenachse in der Freilaufstellung sein.

Durch eine zusätzliche Antriebstellung der Rolle weist das Förderorgan den Vorteil auf, dass das Förderorgan zu mindestens drei Arten des Förderns befähigt ist, aber dennoch eine einfache Konstruktion aufweist.

Indem die Rolle weder in der Antriebstellung, der Arretierstellung noch der Freilaufstellung im Förderorgan bzw. unter oder in der Hauptfläche versenkt ist (i.e. in allen drei Stellungen über die Hauptfläche hinaus ragt), kann das Förderorgan kompakt ausgebildet sein.

Das Förderorgan kann bei robuster Ausführungsweise mit geringem Gewicht ausgebildet sein.

Die Rolle kann durch eine geringe räumliche Bewegung von einer der drei Stellungen in eine andere der drei Stellungen der Rolle bewegt werden. Geringe Distanzen zwischen den Stellungen erlauben ein rasches und/oder materialschonendes Wechseln zwischen den Stellungen.

Als weiteres optionales Merkmal kann das Stellmittel mindestens eine Kulisse umfassen, welche bezüglich des Förderers in mindestens einer Position räumlich fixiert ist.

Die Kulisse selbst kann als Stellmittel dienen, indem sie mit wenigstens einem Teil der Rollenhalterung zusammenwirken kann.

Die Kulisse kann beispielsweise verschiedene Bereiche für voneinander verschiedene Aufgaben aufweisen. Die Kulisse kann etwa einen Bereich zur

Bewegung der Rollenachse in die Freilaufstellung der Rolle umfassen, und einen Bereich für die Antriebstellung der Rolle. Im Bereich für die Antriebstellung kann die Kulisse beispielsweise derart ausgebildet sein, dass die Rolle auf diesem Bereich der Kulisse abrollt.

Das Stellmittel kann mehrere Kulissen umfassen, welche einen und/oder mehrere Bereiche für voneinander verschiedene Aufgaben umfasst.

Die Kulisse kann in mindestens einer Position räumlich fixiert sein. Auf diese Weise wird die Kulisse nicht in Förderrichtung des Förderers mitbewegt.

Die Kulisse kann beispielsweise in einer ersten Position räumlich fixiert sein, in welcher sie mit Rollenführungen zusammenwirken kann, und in eine zweite räumliche Position versetzt werden können, in welcher sie mit der Rollenführungen nicht zusammenwirken kann. Auf diese Weise kann die Kulisse und dadurch das Stellmittel ein- und ausschaltbar ausgebildet sein.

Eine Kulisse ist ein kostengünstiges und robustes Stellmittel. Kulissen funktionieren zuverlässig und weisen eine einfache Konstruktion auf, was mit weiter oben beschriebenen Vorteilen verbunden ist.

Als anderes optionales Merkmal umfasst die Rollenhalterung eine Führung zu einer translatorischen Verschiebung der Rollenachsc.

Insbesondere umfasst die Rollenhalterung eine Achshalterung für die Rollenachse und eine Gleitführung für die Rollenachse mit der Achshalterung.

Eine translatorische Verschiebung erlaubt eine präzise Bewegung der Rollenachse auf kürzesten Weg in eine bestimmte Richtung. Die translatorische Verschiebung der Rollenachse erfolgt dabei mindestens mit einer Komponente senkrecht zur Hauptfläche des Förderelements.

Die Rollenachse kann in der Achshalterung drehfest oder darin drehend befestigt sein. Eine Gleitführung ist einfach, kostengünstig und effizient herstellbar, wartbar und ersetzbar.

Alternativ kann die Rollenhalterung eine Schwenkhalterung für eine Schwenkbewegung der Rollenachse umfassen.

Optional ist die translatorische Verschiebung im Wesentlichen orthogonal zur Hauptfläche ausgerichtet.

Die translatorische Verschiebung kann auch orthogonal zur Hauptfläche ausgerichtet sein.

Insbesondere ist eine Gleitrichtung der Gleitführung im Wesentlichen orthogonal zur Hauptfläche ausgerichtet. Die Gleitrichtung der Gleitführung kann orthogonal zur Hauptfläche ausgerichtet sein.

"Im Wesentlichen orthogonal" heisst orthogonal plus/minus 30 Grad und insbesondere plus/minus 15 Grad. Die translatorische Verschiebung (und insbesondere die Gleitrichtung der Gleitführung) kann also orthogonal zur Hauptfläche oder mit einer Abweichung von bis zu 30 Grad (und insbesondere von bis zu 15 Grad) von der Senkrechten zur Hauptfläche erfolgen.

Durch eine zur Hauptfläche der Gleitführung im Wesentlichen senkrechte Ausrichtung der translatorischen Verschiebung kann eine rasche und effiziente Bewegung der Rollenachse relativ zur Hauptfläche bewirkt werden.

Als ein weiteres optionales Merkmal umfasst der Rollenmechanismus eine Arretiervorrichtung. Dabei liegt dabei die Rolle in der Arretierstellung in Schwerkraftrichtung auf der Arretiervorrichtung auf.

Beispielsweise liegt eine Lauffläche der Rolle auf der Arretiervorrichtung auf.

Die Arretiervorrichtung des Rollenmechanismus bewirkt das Arretieren der Rolle in deren Arretierstellung.

Wenn die Rolle in Schwerkraftrichtung auf der Arretiervorrichtung aufliegt, kann die Arretiervorrichtung selbstarretierend wirken. Selbstarretierend heisst in diesem Fall, dass die Rolle durch ihr eigenes Gewicht und/oder das Gewicht des Förderguts in Schwerkraftrichtung in die Arretiervorrichtung gedrückt wird und auf diese Weise mit zunehmendem Druck eine grössere Arretierungskraft von der Arretiervorrichtung auf die Rolle ausgeübt wird.

Insbesondere kann die Arretiervorrichtung als unterer Anschlag für die Rolle dienen, in welcher die Rolle die Arretierstcllung einnimmt.

Mit unten ist eine Position in Schwcrkraftrichtung flussabwärts gemeint. Ein relativ zur Schwerkraftrichtung seitlicher Versatz spielt dabei keine Rolle - auch bei seitlich versetzten Positionen gilt diejenige als weiter unten liegend, welche in Schwerkraftrichtung weiter flussabwärts angeordnet ist. Anders gesagt ist eine weiter unten liegende erste Position mindestens Komponentenweise in Schwerkraftrichtung stromabwärts einer weiter oben liegenden zweiten Position angeordnet. Dies gilt analog auch für andere Höhenangaben (unten, oben, gleiche Höhe).

Grundsätzlich sind in dieser Anmeldung das Förderorgan und der Förderer für den Fall eines Förderns in horizontaler Richtung beschrieben (also quer zur Schwerkraftrichtung). Beim Fördern in andere Richtungen sind die Richtungsangaben dementsprechend analog angepasst zu verstehen.

Als optionales Merkmal ist die die Arretiervorrichtung als Bremsrahmen ausgebildet. Der Bremsrahmen weist eine einer Kontur der Rolle entsprechende Öffnung auf, wobei die Rolle in der Arretierstellung in Schwerkraftrichtung in die Öffnung hineinreichend auf dem Bremsrahmen aufliegt. Dadurch ragt die Rolle in Schwerkraftrichtung teilweise in die Öffnung hinein.

Insbesondere ragt die Rolle durch den Bremsrahmen hindurch.

Ein solcher Bremsrahmen kann selbstarretierend wirken und weist eine einfache Konstruktion auf. Indem die Rolle durch den Bremsrahmen hindurchragt, kann der Bremsrahmen platzsparend angeordnet sein, was eine kompakte Bauweise des Förderorgans erlaubt.

Als weiteres optionales Merkmal ist der Bremsrahmen starr am Rollenmechanismus befestigt. Dabei ist der Bremsrahmen ortsfest bezüglich des Förderelements ausgebildet.

Als anderes optionales Merkmal ist die Rollenhalterung derart ausgebildet, dass eine räumliche Position der Rolle in der Arretierstellung weiter unten liegt als in der Freilaufstellung. Insbesondere kann die Rolle in der Arretierstellung im Vergleich mit allen anderen Stellungen der Rolle am weitesten unten liegen.

Insbesondere kann die Rolle in der Freilaufstellung im Vergleich mit allen anderen Stellungen der Rolle am weitesten oben und in der sofern vorhandenen Antriebstellung weiter oben als in der Arretierstellung und höchstens so weit oben wie in der Freilaufstellung angeordnet sein.

Somit kann die Rolle in Arretierstellung weiter unten angeordnet sein als die die Rolle in Freilaufstellung.

Die Rolle in Arretierstellung kann weiter unten angeordnet sein als die Rolle in der Antriebstellung.

Die Rolle in Antriebstellung kann weiter unten, gleich hoch oder weiter oben als die Rolle in Freilaufstellung angeordnet sein.

Eine zuunterst angeordnete Arretierstellung erlaubt eine selbstarretierende Ausbildung des Rollenmechanismus und gleichzeitig eine einfache und kompakte Bauweise des Förderorgans.

Optional weist der Rollenmechanismus einen Verstellmechanismus auf, welcher derart ausgebildet ist, dass die Rolle quer zur Förderrichtung des Förderers verschiedene räumliche Lateralpositionen einzunehmen imstande ist.

In den verschiedenen Lateralpositionen kann die Rolle die Arretierstellung und die Freilaufstellung und ggf. auch weitere Stellungen (insbesondere die Antriebstellung) einnehmen. Die Rolle ist durch den Verstellmechanismus quer zur Förderrichtung bewegbar am Förderorgan befestigt. Insbesondere kann die Rolle quer zur Förderrichtung verschiebbar im Verstellmechanismus befestigt sein. Beispielsweise kann der Verstellmechanismus als Schiene ausgebildet sein, an welcher beweglich montierte Rollen angeordnet sind.

Der Verstellmechanismus erlaubt eine gezielte Veränderung der Rollenposition und somit eine Anpassung der Fördereigenschaften des Förderorgans an verschiedene zu fördernde Güter. Auf diese Weise kann das Förderorgan vielseitig und flexibel eingesetzt werden.

Ein weiterer Aspekt der Erfindung betrifft einen Förderer, welcher ein erfindungsgemässes (wie oben beschriebenes) Förderorgan sowie ein Stellmittel umfasst. Dabei kann die Rollenachse durch das Stellmittel relativ zur Hauptfläche des Förderelements zwischen wenigstens zwei räumlich voneinander verschiedenen Positionen bewegt werden.

Die optionalen Merkmale und alle entsprechenden Vorteile des erfindungsgemässen Förderorgans sind weiter oben beschrieben und gelten auch für den Förderer.

Beim Förderer ist optional das Stellmittel derart angeordnet und ausgebildet, dass es in der Freilaufstellung der Rolle die Rollenachse direkt oder indirekt entgegen der Schwerkraftrichtung stützt und die Rolle dadurch frei drehend ist.

Das Stellmittel versetzt also die Rolle in die Freilaufstellung, indem es die Rollenachse gegen oben stützt. Das Stellmittel kann die Rollenachse direkt, also in Kontaktschluss mit der Rollenachse, oder indirekt, also ohne direkten aber beispielsweise über indirekten Kontakt, als etwa über Kontaktschluss mit Achshalterungen gegen oben stützen. Dadurch kann die Arretierstellung weiter unten angeordnet sein.

Als weiteres optionales Merkmal des Förderers umfasst das Förderorgan einen oberen Anschlag für die Rollenachse, welcher derart ausgebildet und angeordnet ist, dass in der Freilaufstellung das Stellmittel die Rollenachse entgegen der Schwerkraftrichtung direkt oder indirekt gegen den oberen Anschlag zu drücken imstande ist.

Durch einen oberen Anschlag für die Freilaufstellung kann das Stellmittel auf einfache und robuste Weise ausgebildet und positioniert sein, wobei gleichzeitig die Rolle die Freilaufstellung zuverlässig einzunehmen imstande ist.

Beispielsweise können im Fall dass die Rollenachse in Achsenhalterung gehalten wird die Achsenhalterung gegen den oberen Anschlag gedrückt werden, wenn die Rolle in Freilaufstellung sein soll.

Als ein anderes optionales Merkmal des Förderers kann in der Antriebstellung die Lauffläche der Rolle mit einer Abrollführung reibschlüssig in Kontakt stehen. Dabei ist die Abrollführung insbesondere vom Stellmittel umfasst.

Die Rolle ist somit durch Abrollen der Lauffläche der Rolle auf der Abrollführung angetrieben. Die Abrollführung kann beispielsweise auf dem Stellmittel ausgebildet sein. So kann etwa ein Stellmittel und insbesondere eine Kulisse auf einer der Hauptfläche entgegengesetzt liegenden Seite der Rolle in reibschlüssigem Kontakt mit der Lauffläche der Rolle stehen und derart eine Abrollführung ausbilden.

Ein Antrieb durch eine Abrollführung ist einfach und kostengünstig herstellbar, wartbar und reparierbar. Eine Abrollführung kann einfach und robust konstruiert sein.

Insbesondere kann der Förderer als Plattenkettenförderer ausgebildet sein. Dabei ist das Förderorgan als eine an einer Kette befestigte Platte ausgebildet.

Alternativ kann der Förderer als Mattenkettenförderer (auch bezeichnet als Modulbandkettenförderer) ausgebildet sein. Dabei sind die Förderelemente zu einer Mattenkette miteinander verbunden, bzw. sind die Module der Modulbandkette als Förderelement ausgebildet.

Die optionalen Merkmale des Förderorgans und/oder des Förderers sind miteinander kombinierbar.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht von oben auf ein Förderorgan;
- Figur 2: eine Ansicht des Förderorgans aus Figur 1 von vorne;
- Figur 3: eine perspektivische Ansicht des Förderorgans aus Figur 1 von unten;
- Figur 4: ein Ausschnitt einer Ansicht des Förderorgans aus Figur 1 von vorne, mit einer Rolle in Freilaufstellung;
- Figur 5: ein Ausschnitt analog zu Figur 4 mit der Rolle in Antriebstellung;
- Figur 6: ein Ausschnitt analog zu Figur 4 mit der Rolle in Arretierstellung;
- Figur 7: eine Seitenansicht des Förderorgans aus Figur 1;
- Figur 8: eine perspektivische Ansicht von oben auf einen Teil eines Förderers, umfassend das Förderorgan aus Figur 1 ;
- Figur 9: eine Ansicht von vorne auf einen Teil des Förderers aus Figur 8.

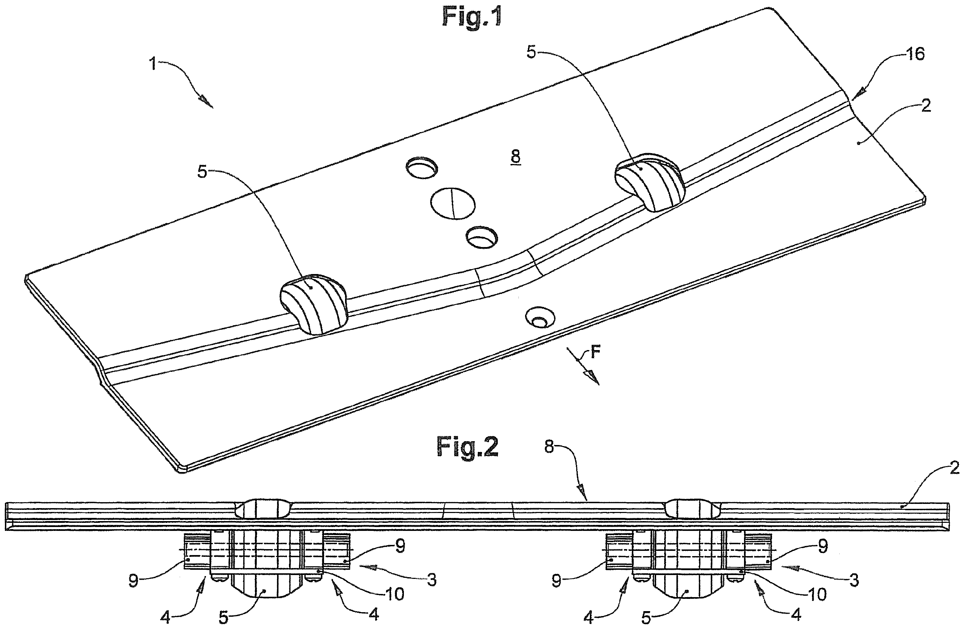

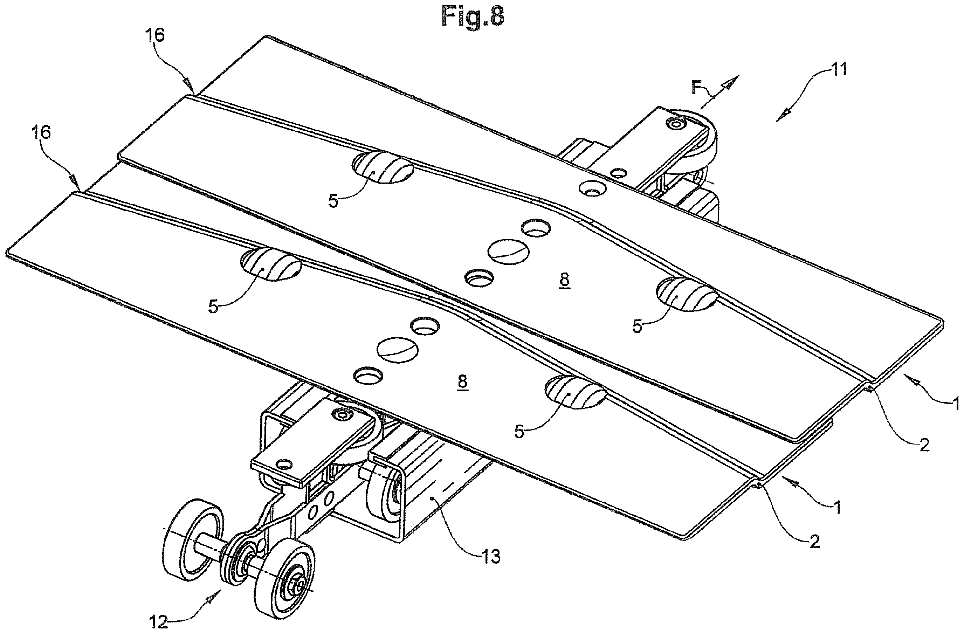

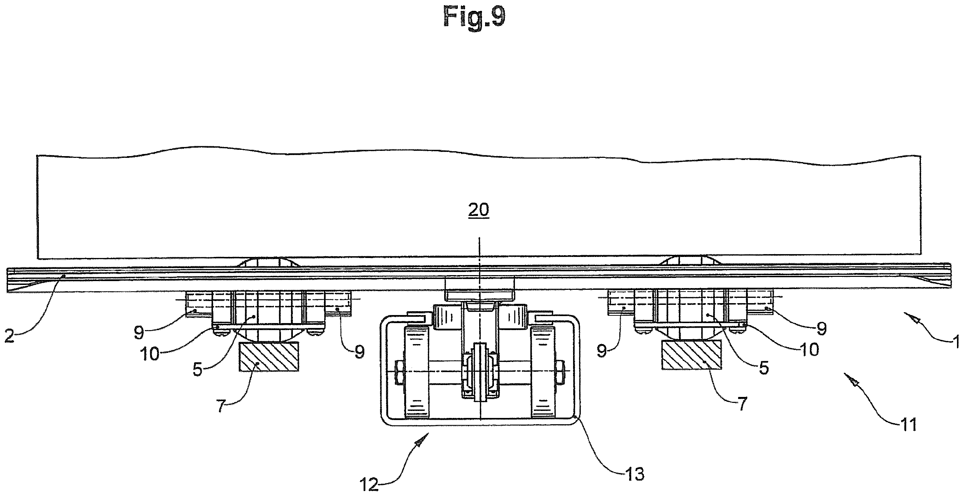

Grundsätzlich sind in den Figuren gleiche Teile mit gleichen Bezugszeichen versehen. Die Figuren 1 bis 7 zeigen ein Ausführungsbeispiel eines Förderorgans 1, und die Figuren 8 und 9 zeigen Teile eines Ausführungsbeispiels eines Förderers 11.

In Figur 1 ist eine perspektivische Ansicht von oben auf ein Ausführungsbeispiel eines erfindungsgemässen Förderorgans 1 dargestellt. Das Förderorgan 1 umfasst das Förderelement 2. Von oben betrachtet weist das Förderelement 2 einen rechteckigen Grundriss auf. Breitseiten des Förderelements 2 verlaufen entlang der Förderrichtung F und sind rund 13 cm lang, Längsseiten des Förderelements 2 verlaufen quer zur Förderrichtung F und sind rund 40 cm lang.

Das Förderelement 2 ist auf seiner oberen Seite stufig ausgebildet. Eine Stufe 16 des Förderelements 2 ist quer zur Förderrichtung F mit einem Knick, also v-förmig ausgebildet und verbindet auf der oben liegenden Seite des Förderelements 2 eine tiefer liegende Fläche und eine höher liegende Fläche, wobei die höher liegende Fläche als Hauptfläche 8 bezeichnet wird. Auf diese Hauptfläche 8 kann das zu fördernde Gut 20 zu liegen kommen. Im Regelfall wird das zu fördernde Gut 20 aber ausschliesslich auf den Rollen 5 des Förderelements 2 zu liegen kommen.

Die tiefer liegende Fläche der oberen Seite des Förderelements 2 wird in der Anwendung des Förderorgans 1 in einem Förderer 11 von einem Teil eines benachbarten Förderelements 2 mindestens teilweise überdeckt. Die Förderorgane 1 sind auf diese Weise ausgebildet, damit benachbarte Förderorgane 1 überlappen können und dadurch die Hauptflächen 8 von benachbarten Förderorganen 1 im Wesentlichen in derselben Ebene zu liegen kommen. Die v-Form der Stufe 16 erlaubt dabei eine quer zur Förderrichtung F ausgerichtete Drehung (eine in einer die Hauptfläche 8 umfassenden Ebene liegende Drehung, ein sogenannter Seitenbogen) von benachbarten Förderorganen 1 relativ zueinander. Die Stufe 16 im Förderelement 2 ist in Förderrichtung F schräg ausgebildet und weist abgesehen von abgerundeten Kanten eine Neigung von 45 Grad auf.

Das Förderelement 2 weist in der Hauptfläche 8 zwei Öffnungen auf, durch welche von unterhalb der Hauptfläche 8 je eine Rolle 5 durch das Förderelement 2 hindurch nach oben ragt. Die Öffnungen liegen etwa in der Mitte des Förderelements 2 in Förderrichtung F betrachtet, und quer zur Förderrichtung F sind beide Öffnungen über die Breite des Förderelements 2 verteilt. Quer zur Förderrichtung F teilen die Rollen 5 das Förderelement 2 somit in drei Abschnitte.

Figur 2 zeigt eine Ansicht des Förderorgans 1 aus Figur 1 von vorne, also gegen die Förderrichtung F betrachtet. Die beiden Rollen 5 sind von jeweils einem Rollenmechanismus 3 umfasst und sind in der Arretierstellung. Beide Rollenmechanismen 3 sind jeweils unterhalb der Hauptfläche 8 angeordnet. Zusätzlich zu einer Rolle 5 umfasst jeder der beiden Rollenmechanismen 3 eine Rollenhalterung 4 und eine Arretiervorrichtung 10. Die Rollenhalterung 4 umfasst dabei zwei Achshalterungen 9, welche die Achse 6 der Rolle 5 beidseitig der Rolle 5 halten.

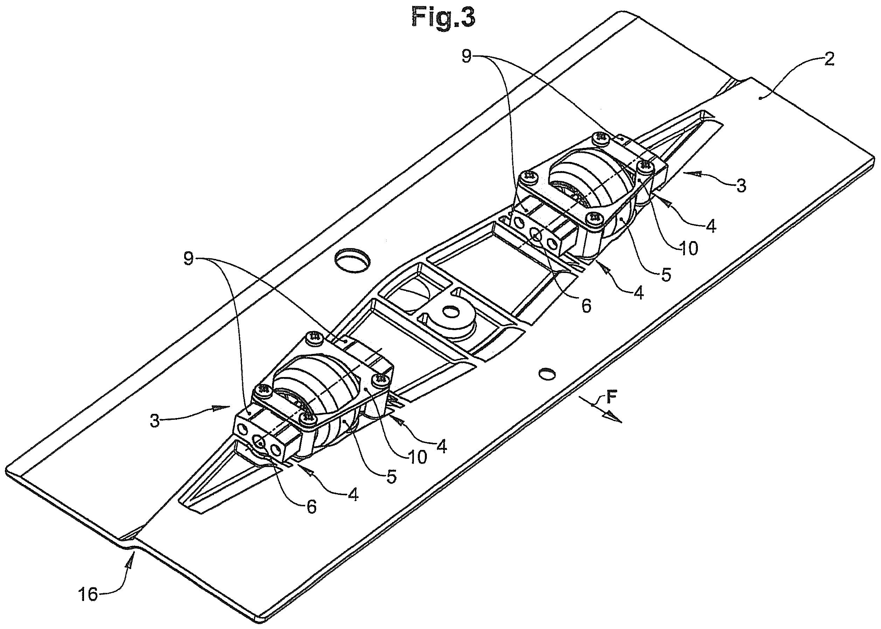

In Figur 3 ist eine perspektivische Ansicht des Förderorgans 1 aus Figur 1 von unten dargestellt. Gut zu erkennen ist eine Trapezform der Arretiervorrichtung 10. Dabei ist die Symmetrieachse der Arretiervorrichtung 10 quer zur Förderrichtung F ausgerichtet, und die schmalen Enden der trapezförmigen Arretiervorrichtungen 10 sind den Breitseiten des Förderelements 2 zugewandt. Durch diese Anordnung sind die Arretiervorrichtungen 10 auf einer ihrer schrägen Seiten der v-förmigen Stufe des Förderelements 2 entlang angeordnet (in Projektion auf die Hauptfläche 8 betrachtet).

Die Arretiervorrichtung 10 ist als Metallplatte ausgebildet, welche eine Öffnung aufweist. Diese Öffnung der Arretiervorrichtung 10 ist derart geformt und dimensioniert, dass die Rolle 5 in die Öffnung hineinragen kann und die Lauffläche der Rolle 5 mit Rändern der Öffnung der Arretiervorrichtung 10 in Kontaktschluss treten kann. Ist die Rolle 5 in der Arretierstellung, dann liegt die Lauffläche der Rolle 5 in Schwerkraftrichtung auf der Arretiervorrichtung 10 auf, und die Rolle 5 ragt teilweise durch die Öffnung der Arretiervorrichtung 10 hindurch. Die Arretiervorrichtung 10 ist starr und ortsfest am Förderelement 2 befestigt und beschränkt die Bewegung der Rolle 5 und somit auch der Rollenachse 6 als unterer Anschlag flussabwärts der Schwerkraftrichtung. Die Arretiervorrichtung 10 ist im vorliegenden Fall auf Stützen aufgeschraubt, welche vom Förderelement 2 ausgebildet sind, und ist parallel zur Hauptfläche 8 angeordnet.

Die Rollenachse 6 ist als Metallstift ausgebildet, um welche die Rolle 5 frei drehend gelagert ist. Die Rollenachse 6 ragt auf beiden Seiten der Rolle 5 aus der Rolle 5 heraus, verläuft dann jeweils durch eine vom Förderelement 2 ausgebildete längliche Öffnung, welche als lineare Gleitführung ausgebildet ist, und endet auf beiden Seiten jeweils in einer Achshalterung 9. Die Rollenachse 6 ist starr und somit drehfest mit den Achshalterungen 9 verbunden. Die vom Förderelement 2 ausgebildete lineare Gleitführung führt die Rollenachse 6 orthogonal zur Hauptfläche 8. Das Förderelement 2 und die Achshalterungen 9 sind aus Kunststoff gefertigt.

Die Arretiervorrichtung 10 dient also als unterer Anschlag für die Rolle 5, indem die Lauffläche der Rolle 5 in Schwerkraftrichtung flussabwärts darauf aufliegen kann. Durch das Gewicht der Rolle und/oder des zu fördernden Guts wirkt die Arretiervorrichtung 10 auf die Rolle 5 selbstarretierend. Die Rollenachse 6 kann durch die lineare Gleitführung in Richtung der Hauptfläche 8 bewegt werden, wobei das Förderelement 2 einen oberen Anschlag für diese Bewegung ausgebildet hat, an welchem die Achshalterungen 9 anschlagen können. Das Förderelement 2 bildet somit einen oberen Anschlag für die Achshalterungen 9 und somit indirekt für die Rollenachsen 6 und die Rollen 5 aus, und in dieser Position befinden sich die Rollen 5 in der Freilaufstellung. Liegen die Rollen 5 am unteren Anschlag auf der Arretiervorrichtung 10 auf, befinden sich die Rollen in der Arretierstellung.

Die Achshalterungen 9, die vom Förderelement 2 ausgebildete lineare Gleitführung für die Rollenachse 6 und die vom Förderelement 2 ausgebildeten oberen Anschläge für die Achshalterungen 9 werden von der Rollenhalterung 4 umfasst.

Die Rollen 5 weisen eine bombierte Form auf. Der Querschnitt der Rollen 5 (also ein Schnitt entlang der Rollenachse 6) weist also eine konvexe Form auf, wobei die Lauffläche der Rollen 5 etwas abgeflacht ist. Die Laufflächen der Rollen 5 sind gummiert, die Rollen 5 selber bestehen aus Kunststoff.

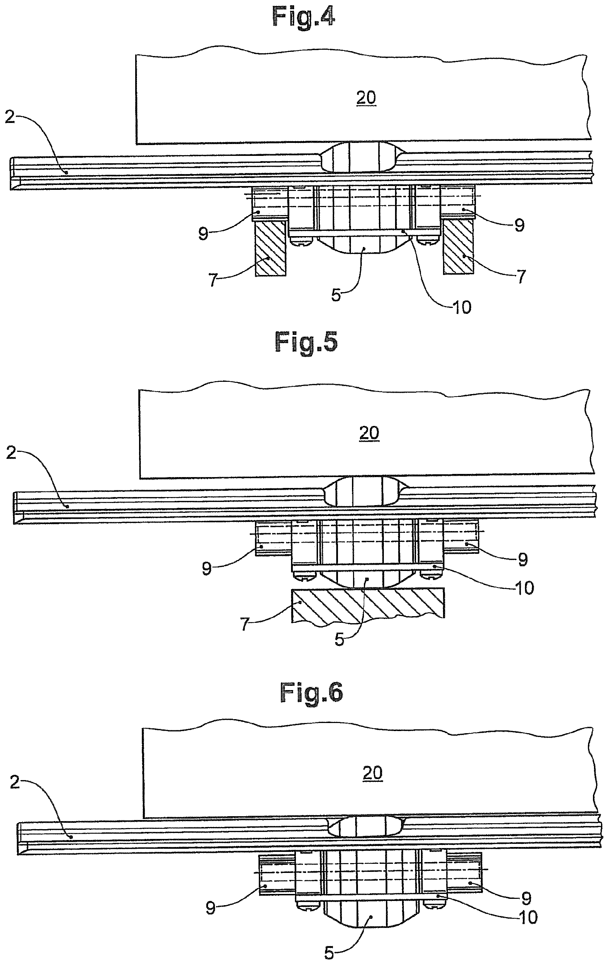

In Figur 4 ist ein Ausschnitt einer Ansicht des Förderorgans 1 aus Figur 1 von vorne dargestellt, wobei sich eine Rolle 5 in Freilaufstellung befindet. Zudem ist in Figur 4 das zu fördernde Gut 20 dargestellt, welches auf der Lauffläche der Rolle 5 aufliegt. Das zu fördernde Gut 20 liegt auf der Rolle 5 auf und wird im Regelfall durch Kontakt mit den Rollen 5 gefördert. Das zu fördernde Gut 20 kann aber auch mit der Hauptfläche 8 in Kontakt sein und beispielsweise mindestens teilweise darauf aufliegen.

Die Freilaufstellung der Rolle 5 in Figur 4 wird erreicht, indem die beiden Stellmittel 7, welche als separate Kulissen ausgebildet sind, die Achshalterungen 9 der Rolle 5 von unten stützen und gegen oben an den oberen Anschlag drücken. Die Achshalterungen 9 liegen also auf den Steilmitteln 7 auf und werden dadurch nach oben gegen das Förderelement 2 gedrückt, welches dafür obere Anschläge ausgebildet hat. In dieser Position befindet sich die Rolle 5 in Figur 4 in der Freilaufstellung, kann also frei drehen. Das zu fördernde Gut 20 kann somit über die als Linearlager des Förderorgans 1 wirkenden Rollen 5 in Freilaufstellung mit wenig Kraftaufwand relativ zum Förderorgan 1 bewegt werden. Das Förderorgan 1 kann beispielsweise unter dem zu fördernden Gut 20 bewegt werden, ohne dass eine grosse Krafteinwirkung auf das zu fördernde Gut 20 erfolgt. Mit anderen Worten ist eine Übertragung einer Bewegungsenergie des Förderorgans 1 auf das zu fördernde Gut 20 dadurch mit Rollen 5 in Freilaufstellung vernachlässigbar. Somit eignet sich das Förderorgan 1 dazu, als Stauförderer eingesetzt zu werden, wo das Förderorgan 1 bewegt wird, das zu fördernde Gut 20 aber bedarfsweise gestaut d.h. im Vergleich mit der Bewegung des Förderorgans 1 zurückgehalten werden kann.

In Figur 5 ist ein Ausschnitt analog zu Figur 4 dargestellt, allerdings mit der Rolle 5 in Antriebstellung. Im Gegensatz zu Figur 4 weist Figur 5 lediglich ein Stellmittel 7 auf. Dieses Stellmittel 7 ist zwar ebenfalls als Kulisse ausgebildet, allerdings weist die Kulisse auf seiner nach oben gerichteten Seite eine Abrollführung auf, auf welcher die Lauffläche der Rolle 5 von oben aufliegt. Die Abrollführung (also das Stellmittel 7) stützt somit die Rolle 5 von unten und treibt die Rolle 5 dadurch an.

Die Abrollführung weist eine ebene Oberfläche auf, welche parallel zur Hauptfläche 8 ausgerichtet ist. Das Stellmittel 7 greift dabei an der Rolle 5 am weitest von der Rollenachse 6 entfernten Punkt an, ebenso wie das zu fördernde Gut 20 auf der gegenüberliegenden Seite der Rolle 5. Die Übersetzung des Antriebs beträgt also 1, was bedeutet, dass die Geschwindigkeit zwischen Stellmittel 7 und Förderorgan 1 gleich gross ist wie die Geschwindigkeit zwischen zu förderndem Gut 20 und Förderorgan 1. Das zu fördernde Gut 20 bewegt sich also durch die Rolle 5 angetrieben doppelt so schnell relativ zum Stellmittel 7 wie das Förderorgan 1.

Die räumliche Position der Rollenachse 6 und damit auch der Rolle 5 ist bei der Freilaufstellung und der Antriebstcllung bei dieser Ausführungsform des Förderorgans 1 identisch, nämlich mit den Achshalterungen 9 am oberen Anschlag anliegend. Die Antriebstellung kann aber auch weiter unten liegen als die Freilaufstellung. Die Freilaufstellung wiederum kann in einer anderen Ausführungsform und/oder Anwendung aber auch weiter unten liegen als die Antriebstellung. Sowohl in der Antriebstellung als auch in der Freilaufstellung kann die Lauffläche der Rolle 5 aber nicht in Kontakt mit der Arretiervorrichtung- 10 treten.

Figur 6 zeigt einen Ausschnitt analog zu Figur 4. Dabei ist die Rolle 5 in Arretierstellung. Wie bereits oben bei Figur 3 beschrieben dient die Arretiervorrichtung 10 als unterer Anschlag für die Rolle 5, indem die Lauffläche der Rolle 5 in Schwerkraftrichtung flussabwärts darauf aufliegen kann. In Figur 6 liegt die Rolle 5 nun auf der Arretiervorrichtung 10 auf und ist in der Arretierstellung. Die Arretierstellung ist die am weitesten unten liegende Stellung der Rolle 5. Durch das Gewicht der Rolle 5 und des zu fördernden Guts 20 wird die Rolle 5 in die Arretiervorrichtung 10 gedrückt, welche somit selbstarretierend funktioniert.

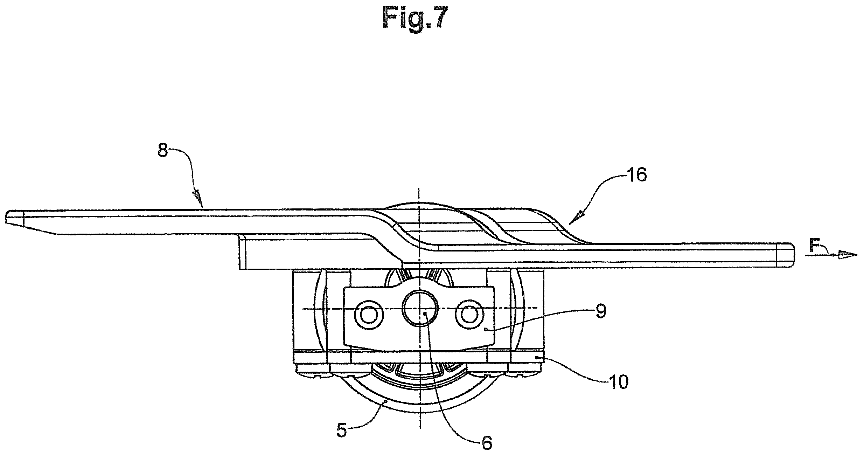

In Figur 7 ist eine Seitenansicht des Förderorgans 1 aus Figur 1 dargestellt. Die Rolle 5 ist dabei in Arretierstellung.

Figur 8 zeigt eine perspektivische Ansicht von oben auf einen Teil eines Förderers 11, welcher Förderorgane 1 aus Figur 1 umfasst. Die Förderorgane 1 sind an einer Kette 12 befestigt, indem die Förderelemente 2 starr an je einem einzelnen Glied der Kette 12 befestig sind. Die Kette 12 ist durch einen Kettenkanal 13 geführt, welche die Kette 12 teilweise umgibt und c-förmig umschliesst. Der Förderer 11 ist als Plattenkettenförderer ausgebildet, wobei Platten die Förderorgane 1 umfassen und diese Platten an der Kette 12 befestigt sind.

In Figur 9 ist eine Ansicht von vorne auf einen Teil des Förderers 11 aus Figur 8 dargestellt. In Figur 9 sind die Rollen 5 in Antriebstellung dargestellt, wobei die Stellmittel 7 unter den Rollen 5 positioniert sind.

## Patentansprüche

1. Förderorgan (1) mit Stellmittel (7), wobei das Förderorgan (1) für einen Förderer (11), insbesondere für einen Stauförderer, ausgebildet ist und ein Förderelement (2) umfasst, welches eine Hauptfläche (8) ausbildet, und mindestens einen Rollenmechanismus (3) umfasst mit mindestens einer Rolle (5), welche eine physische Rollenachse (6) aufweist, wobei der Rollenmechanismus (3) eine Rollenhalterung (4) umfasst, die Rollenachse (6) an der Rollenhalterung (4) befestigt ist, die Rollenhalterung (4) mit dem Stellmittel (7) zusammenwirken kann, die Rollenhalterung (4) am Förderelement (2) angeordnet und die Rollenhalterung (4) derart ausgebildet ist, dass die Rollenachse (6) durch das Stellmittel (7) relativ zur Hauptfläche (8) des Förderelements (2) wenigstens zwischen einer ersten Position und einer zweiten, von der ersten räumlich verschiedenen Position beweglich ist, wobei die Rolle in der zweiten Position der Rollenachse (6) mindestens teilweise über die Hauptfläche (8) des Förderelements (2) hinaus ragt und eine Freilaufstellung einzunehmen imstande ist, und die Rolle (5) in der Freilaufstellung frei drehend ist,
**dadurch gekennzeichnet, dass**
die Rolle (5) in der ersten Position der Rollenachse (6) mindestens teilweise über die Hauptfläche (8) des Förderelements (2) hinaus ragt, und dass die Rolle (5) in der ersten Position der Rollenachse (6) eine Arretierstellung einzunehmen imstande ist, wobei die Rolle (5) in der Arretierstellung bezüglich einer Drehung relativ zur Hauptfläche (8) arretiert ist.

2. Förderorgan (1) gemäss Anspruch 1, **dadurch gekennzeichnet, dass** die Rollenhalterung (4) derart ausgebildet ist, dass die Rolle (5) in einer Antriebstellung der Rolle (5) in der Rollenhalterung (4) angetrieben ist und dabei mindestens teilweise über die Hauptfläche (8) des Förderelements (2) hinaus ragt.

3. Förderorgan (1) gemäss Anspruch 1 oder 2, **dadurch gekennzeichnet, dass** das Stellmittel (7) mindestens eine Kulisse umfasst, welche bezüglich des Förderers 11 in mindestens einer Position räumlich fixiert ist.

4. Förderorgan (1) gemäss einem der Ansprüche 1 bis 3, **dadurch gekennzeichnet, dass** die Rollenhalterung (4) eine Führung zu einer translatorischen Verschiebung der Rollenachse (6) umfasst.

5. Förderorgan (1) gemäss Anspruch 4, **dadurch gekennzeichnet, dass** die translatorische Verschiebung im Wesentlichen orthogonal zur Hauptfläche (8) ausgerichtet ist.

6. Förderorgan (1) gemäss einem der Ansprüche 1 bis 5, **dadurch gekennzeichnet, dass** der Rollenmechanismus (3) eine Arretiervorrichtung (10) umfasst und dass die Rolle (5) in der Arretierstellung in Schwerkraftrichtung auf der Arretiervorrichtung (10) aufliegt.

7. Förderorgan (1) gemäss Anspruch 6, **dadurch gekennzeichnet, dass** die Arretiervorrichtung (10) als Bremsrahmen ausgebildet ist, welcher eine einer Kontur der Rolle (5) entsprechende Öffnung aufweist, wobei die Rolle (5) in der Arretierstellung in Schwerkraftrichtung in die Öffnung hineinreichend auf dem Bremsrahmen aufliegt und dadurch in Schwerkraftrichtung teilweise in die Öffnung hineinragt.

8. Förderorgan (1) gemäss Anspruch 7, **dadurch gekennzeichnet, dass** der Bremsrahmen starr am Rollenmechanismus (3) befestigt und ortsfest bezüglich dem Förderelement (2) ausgebildet ist.

9. Förderorgan (1) gemäss einem der Ansprüche 1 bis 8, **dadurch gekennzeichnet, dass** die Rollenhalterung (4) derart ausgebildet ist, dass eine räumliche Position der Rolle (5) in der Arretierstellung weiter unten liegt als in der Freilaufstellung, und dass insbesondere die Rolle (5) in der Arretierstellung im Vergleich mit allen anderen Stellungen der Rolle (5) am weitesten unten liegt.

10. Förderorgan (1) gemäss einem der Ansprüche 1 bis 9, **dadurch gekennzeichnet, dass** der Rollenmechanismus (3) einen Verstellmechanismus aufweist, welcher derart ausgebildet ist, dass die Rolle (5) quer zur Förderrichtung (F) des Förderers 11 verschiedene räumliche Lateralpositionen einzunehmen imstande ist.

11. Förderer (11) umfassend ein Förderorgan (1) gemäss einem der Ansprüche 1 bis 10, wobei die Rollenachse (6) durch das Stellmittel (7) relativ zur Hauptfläche (8) des Förderelements (2) zwischen wenigstens zwei räumlich voneinander verschiedenen Positionen bewegt werden kann.

12. Förderer (11) gemäss Anspruch 11, **dadurch gekennzeichnet, dass** das Stellmittel (7) derart angeordnet und ausgebildet ist, dass das Stellmittel (7) in der Freilaufstellung der Rolle (5) die Rollenachse (6) direkt oder indirekt entgegen der Schwerkraftrichtung stützt und die Rolle (5) dadurch frei drehend ist.

13. Förderer (11) gemäss Anspruch 11 oder 12, **dadurch gekennzeichnet, dass** das Förderorgan (1) einen oberen Anschlag für die Rollenachse (6) umfasst, welcher derart ausgebildet und angeordnet ist, dass in der Freilaufstellung das Stellmittel (7) die Rollenachse (6) entgegen der Schwerkraftrichtung direkt oder indirekt gegen den oberen Anschlag zu drücken imstande ist.

14. Förderer (11) gemäss einem der Ansprüche 11 bis 13, **dadurch gekennzeichnet, dass** in der Antriebstellung die Lauffläche der Rolle (5) mit einer Abrollführung reibschlüssig in Kontakt stehen kann, wobei die Abrollführung insbesondere vom Stellmittel (7) umfasst ist.

15. Förderer (11) gemäss einem der Ansprüche 11 bis 14, **dadurch gekennzeichnet, dass** der Förderer (11) als Plattenkettenförderer oder als Mattenkettenförderer ausgebildet ist.

## Claims

1. A conveying member (1) with an actuating means (7), wherein the conveying member (1) is suitable for a conveyor (11), in particular for an accumulating conveyor, and wherein the conveying member (1) comprises a conveying element (2) which forms a main surface (8), and at least one roller mechanism (3) with at least one roller (5) which comprises a physical roller pivot (6), wherein the roller mechanism (3) comprises a roller holder (4), the roller pivot (6) is fastened to the roller holder (4), the roller holder (4) can interact with the actuating means (7), the roller holder (4) is arranged on the conveying element (2) and the roller holder (4) is designed in a manner such that the roller pivot (6) is movable by the actuating means (7) relative to the main surface (8) of the conveying element (2) at least between a first position and a second position which is spatially different to the first one, wherein in the second position of the roller pivot (6), the roller (5) projects at least partly beyond the main surface (8) of the conveying element (2) and is capable of assuming a freewheel position, and in the freewheel position the roller (5) is freely rotating,
**characterised in that**
in the first position of the roller pivot (6), the roller (5) projects at least partly beyond the main surface (8) of the conveying element (2) and that in the first position of the roller pivot (6), the roller (5) is capable of assuming an arrested position, wherein in the arrested position, the roller (5) is arrested with respect to a rotation relative to the main surface (8).

2. A conveying member (1) according to claim 1, **characterised in that** the roller holder (4) is designed in a manner such that in a drive position of the roller (5), the roller (5) is driven in the roller holder (4) and at least partly projects beyond the main surface (8) of the conveying element (2).

3. A conveying member (1) according to claim 1 or 2, **characterised in that** the actuating means (7) comprises at least one rail which is spatially fixed in at least one position with respect to the conveyor (11).

4. A conveying member (1) according to one of the claims 1 to 3, **characterised in that** the roller holder (4) comprises a guide for a translatory displacement of the roller pivot (6).

5. A conveying member (1) according to claim 4, **characterised in that** the translatory displacement is aligned essentially orthogonally to the main surface (8).

6. A conveying member (1) according to one of the claims 1 to 5, **characterised in that** the roller mechanism (3) comprises an arresting device (10) and that the roller (5) in the arrested position lies on the arresting device (1) in the direction of gravity.

7. A conveying member (1) according to claim 6, **characterised in that** the arresting device (10) is designed as a braking frame which comprises an opening which corresponds to a contour of the roller (5), wherein the roller (5) in the arrested position lies on the braking frame in a manner reaching into the opening in the direction of gravity and by way of this projects partly into the opening in the direction of gravity.

8. A conveying member (1) according to claim 7, **characterised in that** the braking frame is rigidly fastened to the roller mechanism (3) and is designed in a stationary manner with respect to the conveying element (2).

9. A conveying member (1) according to one of the claims 1 to 8, **characterised in that** the roller holder (4) is designed in a manner such that a spatial position of the roller (5) in the arrested position lies further to the bottom than in the freewheel position and that in particular the roller (5) in the arrested position lies furthest to the bottom compared to all other positions of the roller (5).

10. A conveying member (1) according to one of the claims 1 to 9, **characterised in that** the roller mechanism (3) comprises an adjusting mechanism which is designed in a manner such that the roller (5) is capable of assuming different spatial lateral positions transversely to the conveying direction (F) of the conveyor (11).

11. A conveyor (11) comprising a conveying member (1) according to one of the claims 1 to 10, wherein the roller pivot (6) can be moved relative to the main surface (8) of the conveying element (2) between at least two positions which are spatially different from one another, by way of the actuating means (7).

12. A conveyor (11) according to claim 11, **characterised in that** the arrangement and design of the actuating means (7) is such that in the freewheel position of the roller (5), the actuating means (7) directly or indirectly supports the roller pivot (6) counter to the direction of gravity and the roller (5) is freely rotating on account of this.

13. A conveyor (11) according to claim 11 or 12, **characterised in that** the conveying member (1) comprises an upper stop for the roller pivot (6), said upper stop being designed and arranged in a manner such that in the freewheel position, the actuating means (7) is capable of directly or indirectly pressing the roller pivot (6) against the upper stop counter to the direction of gravity.

14. A conveyor (11) according to one of the claims 11 to 13, **characterised in that** in the drive position, the running surface of the roller (5) can be in frictional contact with a rolling guide, wherein the rolling guide in particular is encompassed by the actuating means (7).

15. A conveyor (11) according to one of the claims 11 to 14, **characterised in that** the conveyor (11) is designed as a plate chain conveyor or as a mat chain conveyor.

## Revendications

1. Organe de transport (1) doté d'un moyen de réglage (7), l'organe de transport (1) étant configuré pour un transporteur (11), notamment un transporteur à accumulation, comportant un élément de transport (2) qui forme une surface principale (8) et présentant au moins un mécanisme (3) à rouleaux doté d'au moins un rouleau (5) qui présente un axe physique (6) de rouleau,
le mécanisme (3) à rouleaux comportant un support (4) de rouleau,
l'axe (6) de rouleau étant fixé sur le support (4) de rouleau,
le support (4) de rouleau pouvant coopérer avec le moyen de réglage (7),
le support (4) de rouleau étant disposé sur l'élément de transport (2) et le support (4) de rouleau étant configuré de telle sorte que l'axe (6) de rouleau puisse être déplacé par le moyen de réglage (7) par rapport à la surface principale (8) de l'élément de transport (2) au moins entre une première position et une deuxième position spatialement différente de la première,
le rouleau situé dans la deuxième position débordant au moins en partie de la surface principale (8) de l'élément de transport (2) et étant en mesure d'être placé dans un état de roulement libre, le rouleau (5) roulant librement lorsqu'il se trouve dans l'état de roulement libre,
**caractérisé en ce que**
lorsque l'axe (6) de rouleau est dans la première position, le rouleau (5) déborde au moins en partie de la surface principale (8) de l'élément de transport (2) et
**en ce que** lorsque l'axe (6) de rouleau est dans la première position, le rouleau (5) est en mesure d'être placé dans un état de blocage, le rouleau (5) étant bloqué dans sa rotation par rapport à la surface principale (8) lorsqu'il se trouve dans l'état de blocage.

2. Organe de transport (1) selon la revendication 1, **caractérisé en ce que** le support (4) de rouleau est configuré de telle sorte que dans un état d'entraînement du rouleau (5), le rouleau (5) est entraîné dans le support (4) de rouleau et déborde au moins en partie de la surface principale (8) de l'élément de transport (2).

3. Organe de transport (1) selon les revendications 1 ou 2, **caractérisé en ce que** le moyen de réglage (7) comporte au moins un coulisseau immobilisé spatialement par rapport au transporteur (11) dans au moins une position.

4. Organe de transport (1) selon l'une des revendications 1 à 3, **caractérisé en ce que** le support (4) de rouleau comporte un guide permettant un déplacement de translation de l'axe (6) de rouleau.

5. Organe de transport (1) selon la revendication 4, **caractérisé en ce que** le déplacement de translation est orienté essentiellement à la perpendiculaire de la surface principale (8).

6. Organe de transport (1) selon l'une des revendications 1 à 5, **caractérisé en ce que** le mécanisme (3) à rouleaux comporte un ensemble de blocage (10) et **en ce que** lorsque le rouleau (5) est en état de blocage, il s'appuie sur l'ensemble de blocage (10) dans la direction de la gravité.

7. Organe de transport (1) selon la revendication 6, **caractérisé en ce que** l'ensemble de blocage (10) est configuré comme bâti de freinage doté d'une ouverture correspondant au contour du rouleau (5), et **en ce que** lorsque le rouleau (5) est en état de blocage , il s'appuie en pénétrant l'ouverture suffisamment sur le bâti de freinage et déborde ainsi en partie dans l'ouverture dans la direction de la gravité.

8. Organe de transport (1) selon la revendication 7, **caractérisé en ce que** le bâti de freinage est fixé rigidement sur le mécanisme (3) à rouleaux et est immobilisé par rapport à l'élément de transport (2).

9. Organe de transport (1) selon l'une des revendications 1 à 8, **caractérisé en ce que** le support (4) de rouleau est configuré de telle sorte que lorsque le rouleau (5) est en état de blocage, sa position spatiale est plus basse que dans l'état de roulement libre et en particulier **en ce que** lorsque le rouleau (5) est en état de blocage, il est situé en position plus basse que toutes les autres positions du rouleau (5) .

10. Organe de transport (1) selon l'une des revendications 1 à 9, **caractérisé en ce que** le mécanisme (3) à rouleaux présente un mécanisme de déplacement configuré de telle sorte que le rouleau (5) puisse prendre dans l'espace différentes positions latérales transversalement par rapport à la direction de transport (F) du transporteur (11).

11. Transporteur (11) comprenant un organe de transport (1) selon l'une des revendications 1 à 10, et dans lequel l'axe (6) de rouleau peut être déplacé par le moyen de réglage (7) entre au moins deux positions spatiales différentes l'une de l'autre par rapport à la surface principale (8) de l'élément de transport (2).

12. Transporteur (11) selon la revendication 11, **caractérisé en ce que** le moyen de réglage (7) est disposé et configuré de telle sorte que lorsque le rouleau (5) est en état de roulement libre, le moyen de réglage (7) soutient l'axe (6) de rouleau directement ou indirectement dans la direction opposée à celle de la gravité et que le rouleau (5) peut ainsi rouler librement.

13. Transporteur (11) selon les revendications 11 ou 12, **caractérisé en ce que** l'organe de transport (1) comporte pour l'axe (6) de rouleau une butée supérieure configurée et disposée de telle sorte que dans l'état de roulement libre, le moyen de réglage (7) est en mesure de pousser l'axe (6) de rouleau directement ou indirectement contre la butée supérieure.

14. Transporteur (11) selon l'une des revendications 11 à 13, **caractérisé en ce que** dans l'état d'entraînement, la surface de roulement du rouleau (5) peut être en contact de frottement avec un guide de roulement, le guide de roulement étant en particulier inclus dans le moyen de réglage (7).

15. Transporteur (11) selon l'une des revendications 11 à 14, **caractérisé en ce que** le transporteur (11) est configuré comme transporteur à chaînes de plaques ou transporteur à chaîne de tapis.
